# EUROPÄISCHE PATENTANMELDUNG

(11) **EP 1 128 334 A1**
(43) Veröffentlichungstag der Anmeldung: **29.08.2001**
(21) Anmeldenummer: 00103076.6
(22) Anmeldetag: 15.02.2000
(51) Int. Cl.: G07C 9/00

(54) **Biometrisches Identifikationssystem**

(71) Anmelder: Infineon Technologies AG, 81669 München (DE)
(72) Erfinder: Brücklmeier, Eric-Roger, 80634 M-nchen (DE)
(74) Vertreter: Zedlitz, Peter, Dipl.-Inf.

(57) **Zusammenfassung**

Bei dem Identifikationssystem werden Abdrücke mehrerer Finger abgespeichert. Von dem System wird angegeben, welcher Finger zur Identifikation herangezogen wird. Vorzugsweise wird je ein Datensatz für alle abbildbaren Finger der Person zum Vergleich gespeichert. Zur Identifikation kann eine beliebige Auswahl und Reihenfolge von zu überprüfenden Fingerabdrücken vom System vorgegeben werden, was durch einen Zufallsgenerator bestimmt werden kann. Nach einer vorgegebenen Anzahl von Fehlversuchen sperrt das System den Zugang zu einer Vorrichtung oder Funktion.

## Beschreibung

Die vorliegende Erfindung betrifft ein biometrisches Identifikationssystem zur Personenidentifizierung anhand eines elektronischen Fingerabdrucksensors.

Biometrische Identifikationssysteme zur Personenerkennung oder zur Verifizierung einer Zugangsberechtigung benutzen vorzugsweise einen Fingerabdrucksensor, der mit elektronischen Mitteln einen Fingerabdruck aufnehmen und dessen wesentliche Ausprägungen mit entsprechend abgespeicherten Vergleichsdaten vergleichen kann. Derartige Vergleichsdaten sind insbesondere die sogenannten Minutien, die die relevanten Punkte des Fingerabdrucks darstellen. Diese Punkte sind besonders die Verzweigungsstellen der Furchen und Stege der Hautoberfläche.

Biometrische Identifikationssysteme, die auf der Erkennung eines menschlichen Fingerabdrucks beruhen, lassen sich auf verschiedene Arten täuschen, so daß z.B. die mit dem Identifikationssystem abgesicherte elektronische Vorrichtung auch von einer Person benutzt werden kann, die dazu nicht befugt ist. Das kann z.B. geschehen, indem ein durch eine dünne Fettschicht auf der für den Finger vorgesehenen Auflagefläche des Sensors gebildeter Restabdruck erneut zur Aufnahme eines Fingerabdruckes verwendet wird. Eine weitere Möglichkeit, ein biometrisches Identifikationssystem zu täuschen, besteht darin, einen künstlichen Finger herzustellen, auf dem ein Fingerabdruck nachgebildet ist, der anhand des Identifikationssystemes als mit einer Zugangsberechtigung verbunden identifiziert wird. Ein derartiger künstlicher Finger ermöglicht dann den jederzeitigen Zugriff auf die mit dem Identifikationssystem abgesicherte Vorrichtung. Um sich in den Besitz eines jederzeit verfügbaren Fingerabdrucks zu bringen, kann auch ein Finger einer autorisierten Person (gewaltsam) von der Hand abgetrennt werden und dann zur Aufnahme des Fingerabdruckes benutzt werden.

Aufgabe der vorliegenden Erfindung ist es, ein biometrisches Identifikationssystem mit einem Fingerabdrucksensor anzugeben, bei dem es nicht oder nur erschwert möglich ist, widerrechtlich eine Identifikation oder Autorisation dadurch zu erlangen, daß ohne eine Beteiligung der betreffenden Person deren Fingerabdruck aufgenommen wird.

Diese Aufgabe wird mit dem biometrischen Identifikationssystem mit den Merkmalen des Anspruches 1 gelöst. Ausgestaltungen ergeben sich aus den abhängigen Ansprüchen.

Bei dem erfindungsgemäßen biometrischen Identifikationssystem werden als Referenz zur Identifikation einer Person die Fingerabdrücke oder deren relevante Ausprägungen mehrerer Finger abgespeichert. Der Vorgang einer Identifikation wird eingeleitet, indem von dem System angegeben wird, welcher Finger der Person zur Identifikation herangezogen wird. Der betreffende Finger muß dann auf den Fingerabdrucksensor aufgelegt werden, so daß der Fingerabdruck erfaßt und ausgewertet werden kann. Die Auswertung geschieht in der Regel in der Weise, daß relevante Ausprägungen des Fingerabdruckes (Minutien) extrahiert werden und mit den Daten eines abgespeicherten entsprechenden Datensatzes auf Übereinstimmung verglichen werden. Ergibt sich dabei eine Übereinstimmung, die den vorgegebenen Sicherheitsanforderungen genügt, gilt die Person als identifiziert. Bei dem erfindungsgemäßen System ist der Anwender vorab im Ungewissen, welcher der in Frage kommenden Finger für die Identifikation herangezogen wird. Eine Täuschung des Systems ist besonders schwierig, wenn je ein Datensatz aus für eine Identifikation relevanten Ausprägungen eines Fingerabdruckes für alle abbildbaren Finger der Person abgespeichert wird, vorzugsweise für alle zehn Finger. Wenn dann das System, beispielsweise durch Verwendung einer geeigneten Zufallsfunktion, einen beliebig ausgewählten Finger als Mittel der Identifikation vorgibt, ist eine Täuschung nur möglich, wenn auch für diesen Finger ein nachgemachter Fingerabdruck vorhanden ist. Das System bestimmt so, mit welchem Finger sich die Person ausweisen muß. Nach einer vorgegebenen Anzahl von Fehlversuchen sperrt sich das System oder sperrt zumindest eine bestimmte vorgesehene Funktion, zu der die Zugangsberechtigung überprüft werden soll.

Das System kann auch ohne Verwendung einer Zufallsgenerierung nach bestimmten Auswahlkriterien derart programmiert sein, daß ein vom Anwender nicht oder nur schwer zu durchschauendes System einer Abfolge von abgefragten Fingerabdrücken zur Überprüfung der Zugangsberechtigung verwendet wird. Werden mehrere Vorrichtungen mit dem Identifikationssystem abgesichert, können die vom System in bestimmter Reihenfolge oder nach bestimmten Kriterien abgefragten Fingerabdrücke von Vorrichtung zu Vorrichtung unterschiedlich programmiert sein. Die Kriterien können dabei im Prinzip beliebig vorgegeben sein. Zum Beispiel können vormittags der linke Zeigefinger und nachmittags der rechte Mittelfinger zur Identifikation herangezogen werden. Ebenso kann z.B. die Uhrzeit oder das Datum die Auswahl des jeweiligen Fingers bestimmen. Eine gänzlich zufällige Auswahl hat aber den Vorteil, daß es nicht möglich ist, eine der Auswahl zugrundeliegende Systematik auszuforschen.

Bei dem erfindungsgemäßen Identifikationssystem ergeben sich folgende Vorteile:
Ein auf dem Sensor verbleibender Restabdruck von einem zuvor aufgelegten Finger ist wertlos, wenn gewährleistet ist, daß nicht zweimal der gleiche Abdruck verlangt wird. Zu diesem Zweck kann insbesondere bei einer zufälligen Auswahl des Fingers als zusätzliche Bedingung eine Wiederholung ausgeschlossen werden. Ein weiterer Vorteil ist, daß es schwierig ist, alle zehn Fingerabdrücke einer Person in einer brauchbaren Ausführung zu kopieren oder sich in den Besitz von zehn abgeschnittenen Fingern zu bringen.
Eine Weiterbildung des Systems sieht vor, daß nicht nur ein Fingerabdruck erfaßt wird, sondern daß zur Überprüfung einer Zugangsberechtigung eine Mehrzahl von Fingern in einer vom System vorgegebenen Anzahl oder Reihenfolge auf den Fingerabdrucksensor aufgelegt werden muß. Damit ist auch die Wahrscheinlichkeit stark reduziert, bei der Abfrage des Fingerabdruckes zufällig gerade ein Imitat des betreffenden Fingers parat zu haben. Werden mehrere Fingerabdrücke vom System abgefragt, ist es für den Fälscher erforderlich, über diese Mehrzahl von kopierten Fingern oder Fingerabdrücken zu verfügen. Das System wird dadurch auch für höhere Sicherheitsstufen brauchbar. Auch hierbei ist es möglich, die Anzahl der Aufnahmen von Fingerabdrücken und/oder die jeweilige Auswahl der abzubildenden Finger durch einen Zufallsgenerator bestimmen zu lassen.

## Patentansprüche

1. Biometrisches Identifikationssystem,
bei dem ein elektronischer Sensor zur Erfassung und Auswertung eines Fingerabdrucks vorhanden ist,
bei dem mindestens ein Datensatz aus für eine Identifikation relevanten Ausprägungen eines Fingerabdrucks zu einem Vergleich verfügbar ist und
bei dem nach einer vorgegebenen Anzahl von Aufnahmen eines Fingerabdrucks, die nicht anhand des Datensatzes zugeordnet werden können, eine vorgesehene Funktion selbsttätig gesperrt wird,
**dadurch gekennzeichnet,** daß
- die relevanten Ausprägungen der Fingerabdrücke mindestens zweier Finger einer zu identifizierenden Person in dem Datensatz verfügbar sind und
- eine Identifikation dieser Person anhand des Fingerabdrucks eines der Finger der Person, der jeweils vom System vorgegeben wird, vorgenommen wird.

2. Identifikationssystem nach Anspruch 1,
bei dem eine Identifikation anhand mindestens zweier Aufnahmen eines Fingerabdrucks eines der Finger der Person vorgenommen wird, wobei die Anzahl der Aufnahmen und/oder die jeweilige Auswahl des Fingers des aufzunehmenden Fingerabdrucks vom System jeweils vorgegeben wird.

3. Identifikationssystem nach Anspruch 1 oder 2,
bei dem eine Identifikation anhand des Fingerabdrucks eines der Finger der Person vorgenommen wird, der jeweils zufällig vom System vorgegeben wird.

4. Identifikationssystem nach einem der Ansprüchen 1 bis 3,
bei dem je ein Datensatz aus für eine Identifikation relevanten Ausprägungen eines Fingerabdruckes für alle abbildbaren Finger der Person verfügbar ist.
